# EUROPEAN PATENT SPECIFICATION

(11) **EP 2 723 775 B1**
(45) Date of publication and mention of the grant of the patent: **02.08.2017**
(21) Application number: 12728570.8
(22) Date of filing: 20.06.2012
(51) Int. Cl.: C08C 1/08, C09J 111/02

(54) **METHOD OF CONCENTRATING AN AQUEOUS DISPERSION COMPRISING ORGANIC POLYMER PARTICLES AND SILICON DIOXIDE PARTICLES**
VERFAHREN ZUM AUFRAHMEN EINER WÄSSRIGEN POLYMER-DISPERSION MIT KIESELERDE PARTIKELN
MÉTHODE POUR CONCENTRER UNE DISPERSION AQUEUSE COMPRENANT DES PARTICLES DE POLYMER ORGANIQUE ET DES PARTICLES DE SILICE.

(30) Priority: 21.06.2011 EP 11170682
(43) Date of publication of application: 30.04.2014
(73) Proprietor: Covestro Deutschland AG, 51373 Leverkusen (DE)
(72) Inventor: PANSKUS, Knut, 51375 Leverkusen (DE); MUSCH, Ruediger, 51467 Bergisch Gladbach (DE); PANTKE, Dietrich, 40882 Ratingen (DE); KIRCHMEYER, Stephan, D-51381 Leverkusen (DE)
(74) Representative: Levpat
(86) International application number: PCT/EP2012/061828
(87) International publication number: WO 2012/175553

(56) References cited:
- US-A1- 2005 085 584

## Description

The present invention relates to a method of concentrating an aqueous dispersion comprising organic polymer particles and silicon dioxide particles. The invention further relates to a concentrated aqueous silicon dioxide dispersion which is obtained by a method according to the invention and to the use of such dispersions as adhesives.

The combination of silicon dioxide dispersions with organic polymer dispersions such as adhesive dispersions is thought to have numerous beneficial effects. Such combinations may be achieved by either polymerizing a monomer in the presence of inorganic particles dispersion or by mixing preformed inorganic particle and organic polymer dispersions.

An example for the first case is given in US 2004/0077761 A1 which discloses filler-containing organic polymer dispersion. The organic polymer of the dispersion is polymerized in the presence of particles of at least one filler. The ratio of the particle size of the filler particles to the particle size of the polymer particles is in the range of from 1.1:1 to 20:1.

An example of the latter case is given in US 2006/0115642 A1 which provides a process for finishing fibrous products with a preparation based on aqueous dispersions of polychloroprene and a process for preparing textile-reinforced and fiber-reinforced concrete and other cement-based products including those finished products. In the process for reinforcing one of concrete and cement, the improvement disclosed herein includes a fibrous product soaked in a preparation comprising: (a) about 20 to about 99 wt. % of an aqueous dispersion based on polychloroprene; and (b) about 1 to about 80 wt. % of an aqueous suspension based on inorganic solids chosen from oxides, carboxides and silicates; (c) optionally, polymer dispersions chosen from polyacrylates, polyacetates, polyurethanes, polyureas, rubbers and epoxides, and (d) optionally, additives and auxiliaries chosen from resins, stabilizers, antioxidants, cross-linking agents, cross-linking accelerators, fillers, thickening agents and fungicides, wherein the weight percentages of (a) and (b) total 100 wt. % and are based on the weight of non-volatile fractions.

US2005/085584 discloses a process for preparing polymer dispersions, useful as adhesive comprising aqueous dispersions of polyurethane, polychloroprene and silicon dioxide. When mixing a commercially available adhesive dispersion with a commercially available silicon dioxide dispersion, an undesired dilution of the resulting mixture, especially with respect to the silicon dioxide content may occur. This necessitates a subsequent concentration step.

Several methods of increasing the solids content of polymer latices such as SBR (styrene butadiene rubber), NBR (acrylonitrile butadiene rubber), polychloroprene, polybutadiene, polyisoprene, natural rubber, polyvinylchloride or (meth)acrylate dispersions or dispersions of copolymers thereof are known in the art.

A non-exhaustive compilation of such methods is given in Houben-Weyl, vol. XIV/1 "Makromolekulare Stoffe" vol. 1, 4. edition, p. 515 (1961), in Polymer Colloids, Elsevier Applied Science Publishers, p. 272 (1985) or Industrial and Engineering Chemistry, vol. 43, Febr. 1951, pp 406-412, Ernst Schmidt and R. H. Kelsey "Creaming Latex with Ammonium Alginate".

By way of example, US 2009/0234064 A1 discloses an aqueous elastomer dispersion which includes a dispersed phase and an aqueous phase. The dispersed phase includes an elastomer including curable aliphatic conjugated-diene elastomers, such as polyisoprene, and a minor amount of at least one additive. The aqueous phase includes water and other optional components in either a soluble state or a dispersion state. The aqueous elastomer dispersion may be prepared by dissolving an elastomer, such as rubber, and additives in a solvent mixture and then converting the resulting solution into an aqueous emulsion. The aqueous emulsion is concentrated and the solvent is stripped from it to yield a dilute latex. The dilute latex that is obtained is concentrated again. Articles made from the aqueous elastomer dispersion include medical gloves, condoms, probe covers, dental dams, finger cots, catheters and the like.

The concentration of a combination of dispersions of inorganic and organic substances is not described therein.

The disclosed methods of concentrating dispersions of organic substances have the disadvantage that an agglomeration of the particles of the dispersion may take place (when adding electrolytes, freezing, water evaporation), that filter pores may become clogged (ultrafiltration) or that foaming may prevent an effective separation (centrifugation). In the use of creaming agents it has been thought that the particle size of the latex to be treated is of decisive importance. While natural rubber latex with a particle size of 400 nm can be creamed rapidly and without problems, the creaming of, for example, SBR latex with a particle size of 78 nm by ammonium alginate was not successful (Ind. Eng. Chem. 43, 407 (1951)).

It would therefore be desirable to be able to concentrate dispersions of polymer particles with silicon dioxide particles without suffering the above-mentioned drawbacks. The present invention has the object of providing such a method.

According to the invention this object is achieved by a method of concentrating an aqueous dispersion comprising organic polymer particles and silicon dioxide particles, comprising the steps of:
a) providing an aqueous dispersion comprising organic polymer particles and silicon dioxide particles, the dispersion having an initial content of organic polymers and an initial content of silicon dioxide;
b) contacting the dispersion of step a) with a creaming agent to yield an aqueous serum phase and an aqueous concentrated phase,
   the serum phase having an organic polymer content lower than the initial content of organic polymers in the dispersion of step a) and/or having a silicon dioxide content lower than the initial content of silicon dioxide in the dispersion of step a) and
   the concentrated phase having an organic polymer content higher than the initial content of organic polymers in the dispersion of step a) and/or having a silicon dioxide content higher than the initial content of silicon dioxide in the dispersion of step a) and
c) separating the serum phase from the concentrated phase.

Another embodiment of the presently claimed invention is a method of concentrating an aqueous dispersion comprising organic polymer particles and silicon dioxide particles, comprising the steps of:
a) providing an aqueous dispersion comprising organic polymer particles and silicon dioxide particles, the dispersion having an initial content of organic polymers and an initial content of silicon dioxide;
b) contacting the dispersion of step a) with a creaming agent to yield an aqueous serum phase and an aqueous concentrated phase,
   the serum phase having an organic polymer content lower than the initial content of organic polymers in the dispersion of step a) and having a silicon dioxide content lower than the initial content of silicon dioxide in the dispersion of step a) and the concentrated phase having an organic polymer content higher than the initial content of organic polymers in the dispersion of step a) and having a silicon dioxide content higher than the initial content of silicon dioxide in the dispersion of step a) and
c) separating the serum phase from the concentrated phase.

It has been surprisingly found that the method according to the invention allows concentrating polymer particle/silicon dioxide dispersions without particle agglomeration during the concentration step. The particle size distribution of the dispersions, in particular with respect to the silicon dioxide particles, is virtually unchanged.

It was also surprising that the composition of the creamed mixtures can be influenced with respect to the organic and inorganic components by the choice of the creaming agent.

The addition of a polymer particle dispersion and in particular polymer latices to inorganic dispersions before creaming increases the concentration which can be achieved and a homogenous distribution of the organic and inorganic particles is effected. The particle concentrations of the creamed mixtures are significantly higher than what may have been achieved by separately concentrating the individual components and subsequent mixing.

Step a) of the method involves providing an aqueous dispersion comprising organic polymer particles and silicon dioxide dispersion with respective initial, meaning before the concentration step, contents of the aforementioned particles. While not strictly necessary, organic co-solvents or other dissolved organic substances such as ethylene oxide based emulsifiers may also be present in this dispersion, for example in an amount up to 20 wt% based on the dispersion.

Step b) of the method calls for contacting this dispersion with a creaming agent. The creaming agent may be, for example, provided in the form of an aqueous solution, as an aqueous colloid or in solid form. If needed, co-solvents may also be present.

Different methods of creaming have been reported in the literature:
Stevens AH (1934): Improvements Relating to the Treatment of Rubber Latex B. P. 415, 133; appl. 23.2.33; publ. 23.8.34
Rhodes E, Sekaran KC (1937): Concentration of latex. B.P.474, 651; appl. 24.8.36; publ. 4.11.37.
Dafader NC, Haque ME, Akhtar F, Ahmad MU, Utama MJ (1996),Macromol. Sci., A 33, 1 (2): 73.
Peethambaran NR, Kuriakose B, Rajan M, Kuriakose APJ (2003): Rheological behaviour of natural rubber latex in the presence of surface-active agents; Appl. Polym. Sci., 41(5-6): 975.

Suitable creaming agents for the method according to the present invention are all creaming agents known in the prior art, but preferably alginates, cellulose derivatives, methyl cellulose, agar-agar, salts of poly(meth)acrylic acid, copolymers of alkyl(meth)acrylates and/or styrene with unsaturated sulfonic acid derivatives or olefinically unsaturated monobasic or polybasic carboxylic acids or salts thereof, and salts of divalent ions, such as e.g. calcium acetate are used. The creaming agent has a size which is below the polymer particle size as defined herein, i.e. below 10 nm.

The creaming agent has the effect that the dispersion separates into a solid-rich aqueous phase and a low-solid aqueous (serum) phase. Hence, the (dispersed) solids content in the serum phase is lower than in the initially provided dispersion and the (dispersed) solids content in the concentrated phase is higher. Due to the high density of the inorganic solids in particular the concentrated phase forms the lower phase and the serum the upper phase. By way of example, in absolute terms the serum phase may have a solids content of ≤ 25 weight-% and preferably ≤ 20 weight-%. The phase boundary may, for instance, be determined by visual inspection or by other optical means.

The separation in step c) can be performed in a settler such as described in DE 10 145 097 A1.

The creaming may be a discontinuous or continuous process at temperatures below, at or above room temperature. Preferably, the method is performed at about room temperature, i.e. from 10 to 35 °C. It is also possible to wait for a pre-determined time before the separation step c). A pre-determined time may be 24 hours.

The present invention is described in further detail in connection with preferred embodiments. They may be combined freely unless the context clearly indicates otherwise.

In one embodiment of the method according to the invention the organic polymer particles are selected from the group comprising styrene butadiene rubber particles, acrylonitrile butadiene rubber particles, polychloroprene particles, chloroprene-dichlorobutadiene copolymer particles, polybutadiene particles, polyisoprene particles, chlorinated polyisoprene particles, polyurethane particles, natural rubber particles, polyvinylchloride or (meth)acrylate particles and/or particles of copolymers thereof.

Preferably the organic polymer particles are polyurethane particles and/or polychloroprene particles such as poly-2-chlorobutadiene or poly (2-chlorobutadiene -2,3-dichlorobutadiene 1,3) copolymers. Polychloroprene dispersions may be obtained by emulsion polymerization of chloroprene and optionally a copolymerizable, ethylenically unsaturated monomer in an alkaline medium. Examples are given in WO 2002/24825 A1, DE 30 02 734 A1 or US 5,773,544. Particularly preferred are polychloroprene dispersions that have been produced by continuous polymerization such as in WO 2002/24825 A1, example 2 and DE 30 02 734 A1, example 6, wherein the regulator content can be varied between 0.01% and 0.3%.

Polyurethane dispersions may be obtained by emulsion polymerization. Examples are given in US 20050085584 A1, Tab.1 Dispersion B (Dispercoll^{®} U from Bayer Material Science AG, Germany) or in US 20050131109 A1, Examples in Tab. 1.

In another embodiment of the method according to the invention the organic polymer particles are present in the form of a polymer latex. In the context of the present invention a polymer latex is to be understood as a dispersion where solid polymer particles are dispersed in a liquid phase and where this phase forms an emulsion in water. Preferred polymer latices are those with a density of ≥ 1.01 g/cm³ and more preferred ≥ 1.06 g/cm³.

In another embodiment of the method according to the invention the initial content of organic polymers in the dispersion of step a) is ≥ 20 weight-% to ≤ 99 weight-%. Preferably the initial content is ≥ 30 weight-% to ≤ 90 weight-%.

In another embodiment of the method according to the invention the mean particle size of the organic polymer particles is ≥ 20 nm to ≤ 400 nm. The mean particle size can also be referred to as the primary average particle diameter and can be determined by ultracentrifugation according to H. G. Müller, Progr. Colloid Polym. Sci. 107, 180-188 (1997). It is expressed as the mass average. Preference is given to using those polymer particles with a primary average particle diameter of ≥ 40 nm to ≤ 200 nm.

In another embodiment of the method according to the invention the silicon dioxide particles are present in the form of a silica sol, a silica gel, a pyrogenic silica dispersion, a precipitated silica dispersion or a mixture of these.

Silica sols are colloidal solutions of amorphous silicon dioxide in water, which are also referred to as silicon dioxide sols but are usually referred to for short as silica sols. The silicon dioxide therein is in the form of spherical, surface-hydroxylated particles. The diameter of the colloidal particles is generally from 1 to 200 nm, with the specific BET surface area that correlates with the particle size (determined by the method of G. N. Sears, Analytical Chemistry Vol. 28, N. 12, 1981-1983, December 1956) being from 15 to 2000 m²/g. The surface of the SiO₂ particles has a charge which is compensated by a corresponding counterion, leading to the stabilization of the colloidal solution. The alkali-stabilized silica sols generally possess a pH of from 7 to 11.5 and comprise as alkalifying agents, for example, small amounts of Na₂O, K₂O, Li₂O, ammonia, organic nitrogen bases, tetraalkylammonium hydroxides or alkali metal or ammonium aluminates. Silica sols may also be in weakly acidic form, as semi-stable colloidal solutions. Furthermore, it is possible by coating the surface with Al₂(OH)₅Cl to prepare cationically formulated silica sols. The solids concentrations of the silica sols generally are from 5 to 60% by weight SiO₂.

The preparation procedure for silica sols essentially encompasses the production steps of dealkalifying water glass by ion exchange, setting and stabilizing the particular SiO₂ particle size (distribution) desired, setting the particular SiO₂ concentration desired, and, where appropriate, modifying the surface of the SiO₂ particles, with Al₂(OH)₅Cl, for example, or with silane as set out in for example WO 2004/035474. In none of these steps do the SiO₂ particles leave the colloidally dissolved state. This explains the presence of the discrete primary particles which are highly effective as binders, for example.

By silica gels are meant colloidally formed or unformed silica of elastic to solid consistency with a pore structure varying from relatively loose to dense. The silica is in the form of highly condensed polysilicic acid. On the surface there are siloxane and/or silanol groups. The silica gels are prepared from water glass by reaction with mineral acids. The primary particle size is generally from 3 to 20 nm and the specific surface area is generally from 250 to 1000 m²/g (according to DIN 66131).

A further distinction is made between pyrogenic silica and precipitated silica. In the precipitation process, water is introduced and then water glass and acid, such as H₂SO₄, are added simultaneously. This produces colloidal primary particles which, as the reaction proceeds, undergo agglomeration and grow together to form agglomerates. The specific surface area is generally from 30 to 800 m²/g (DIN 66131) and the primary particle size is generally from 5 to 100 nm. The primary particles of these solid silicas are firmly crosslinked to form secondary agglomerates.

Pyrogenic (or fumed) silicas can be prepared by flame hydrolysis or by means of the light arc process. The predominant synthesis process for pyrogenic silicas is flame hydrolysis, in which tetrafluorosilane is decomposed in an oxyhydrogen flame. The silica formed in this process is X-ray-amorphous. Pyrogenic silicas possess significantly fewer OH groups on their virtually pore-free surface than precipitated silica. The pyrogenic silica prepared by flame hydrolysis generally has a specific surface area of from 50 to 600 m²/g (DIN 66131) and generally a primary particle size of from 5 to 50 nm; the silica prepared by the light arc process generally has a specific surface area of from 25 to 300 m²/g (DIN 66131) and generally a primary particle size of from 5 to 500 nm.

Further details on synthesis and properties of silicas in solid form can be found, for example, in K. H. Büchel, H.-H. Moretto, P. Woditsch "Industrielle Anorganische Chemie", Wiley VCH Verlag 1999, section 5.8.

Where an SiO₂ raw material present in the form of an isolated solid, such as pyrogenic or precipitated silica, is used for the polymer dispersion of the invention, it is converted into an aqueous SiO₂ dispersion by dispersing it.

To prepare the silicon dioxide dispersion, known dispersers may be used, preferably those suitable for producing high shear rates, such as Ultraturrax or dissolver discs, for example.

A preferred silicon dioxide dispersion is colloidal silica. It is likewise preferred for the SiO₂ particles to possess hydroxyl groups on the particle surface.

In another embodiment of the method according to the invention the initial content of silicon dioxide in the aqueous silicon dioxide dispersion of step a) is ≥ 1 weight-% to ≤ 80 weight-%. Preferably the initial content is ≥ 10 weight-% to ≤ 70 weight-%.

In another embodiment of the method according to the invention, in the aqueous silicon dioxide dispersion of step a) the mean particle size of silicon dioxide particles is ≥ 1 nm to ≤ 400 nm. The mean particle size can also be referred to as the primary average particle diameter and can be determined by ultracentrifugation, preferably as set out in H. G. Müller, Progr. Colloid Polym. Sci. 107, 180-188 (1997). It is expressed as the mass average. Preference is given to using those aqueous silicon dioxide dispersions whose SiO₂ particles have a primary average particle diameter of ≥ 3 nm to ≤ 100 nm and with particular preference of ≥ 5 nm to ≤ 70 nm. When precipitated silicas are used, they are ground in order to reduce the particle size.

In another embodiment of the method according to the invention, in the dispersion of step a) the silicon dioxide particles have a bimodal or multimodal particle size distribution. For example, in a bimodal case one maximum in the particle size distribution may be in the range of ≥ 5 nm to ≤ 15 nm and another maximum may be in the range of ≥ 45 nm to ≤ 65 nm. The method of the present invention allows for preparing concentrated bimodal or multimodal dispersions that would not have been accessible otherwise.

In another embodiment of the method according to the invention the creaming agent is selected from the group comprising alginates, cellulose derivates, methyl cellulose, agar-agar, poly(meth)acrylic salts, and/or copolymers of alkyl(meth)acrylates and/or styrene with unsaturated sulfonic acid derivates or olefinically unsaturated mono- or polycarboxylic acids or salts thereof.

Preferably the creaming agent is sodium alginate, potassium alginate and/or ammonium alginate.

In another embodiment of the method according to the invention the creaming agent is provided in form of an aqueous solution and the content of the creaming agent in the aqueous solution is ≥ 0.5 weight-% to ≤ 10 weight-%. Preferred concentrations are ≥ 1 weight-% to ≤ 5 weight-% and more preferred ≥ 1.5 weight-% to ≤ 4 weight-%.

In another embodiment of the method according to the invention the creaming agent is present in an amount of ≥ 0.2 weight-% to ≤ 10 weight-%, based on the solids content of the dispersion of step a). Preferred amounts are ≥ 0.3 weight-% to ≤ 8 weight-% and more preferred ≥ 0.4 weight-% to ≤ 7 weight-%.

In another embodiment of the method according to the invention the separation in step c) is at least partially performed by centrifugation. This greatly accelerates the separation of the serum.

By "polymer particles" in this application is meant particles which are not soluble in water. Preferably, by the term "polymer dispersion" or "latex" is meant a colloidal stable dispersion of polymer particles in an aqueous phase. Preferably, the diameter of organic polymer particles as described herein ranges from 10 nm to 100 µm, more preferably from 10 nm to 1 µm. Preferably, the stability of the dispersion is achieved either through surface active ingredients such as tensides or protection colloids or by incorporating ionic groups into the polymer backbone (internal emulsifier).

Polymer dispersions can be synthesized directly from the monomers by different polymerization methods as emulsion polymerization or suspension polymerization or by dispersing the polymers. Natural rubber from the rubber tree (Hevea Brasiliensis) is an example of an natural borne polymer dispersion. Preferably, the dispersion prepared according to the method are comprising polychloroprenes and/or polyurethanes as organic polymer particles.

The dispersion may optionally contain further additives and auxiliary agents which are known from adhesive and dispersion technology, e.g. resins, stabilizers, antioxidants, cross-linking agents and cross-linking accelerators. For example, fillers such as quartz flour, quartz sand, barites, calcium carbonate, chalk, dolomite or talcum, optionally together with cross-linking agents, for example polyphosphates such as sodium hexametaphosphate, naphthalinesulfonic acid, ammonium or sodium polyacrylic acid salts, may be added, wherein the fillers are preferably added in amounts of 10 to 60 wt. %, more preferably 20 to 50 wt. % and the cross-linking agents are preferably added in amounts of 0.2 to 0.6 wt. %, all weight percentages with respect to the non-volatile fractions.

Other suitable auxiliary agents such as for example organic thickening agents may preferably be added in amounts of 0.01 to 1 wt. %, with respect to non-volatile fractions, or inorganic thickening agents such as for example bentonites preferably in amounts of 0.05 to 5 wt. %, with respect to non-volatile fractions, may be added to dispersions (a) or (b) or the entire preparation, wherein the thickening effect in the formulation should preferably not exceed 1000 mPas.

For preservation purposes, fungicides may also be added to compositions according to the invention. These may preferably be used in amounts of 0.02 to 1 wt. %, with respect to non-volatile fractions. Suitable fungicides are for example phenol and cresol derivatives or tin inorganic compounds or azol derivatives such as TEBUCONAZOL or KETOCONAZOL.

Tackifying resins such as e.g. unmodified or modified natural resins such as colophony esters, hydrocarbon resins or synthetic resins such as phthalate resins may also optionally be added to compositions according to the invention or to the components used for preparing these in dispersed form (see e.g. in "Klebharze" R. Jordan, R. Hinterwaldner, p. 75-115, Hinterwaldner Verlag, Munich, 1994). Alkyl phenol resin and terpene phenol resin dispersions with softening points preferably higher than 70 °C, more preferably higher than 110 °C, are preferred.

The present invention will be further described with reference to the following examples and the figure without wishing to be limited by them.

### Examples

### Glossary:

Manutex: Sodium alginate (creaming agent), Monsanto, UK
SiO₂ dispersions used:

| Product | Supplier | Supplied form | Type | Density | Mean particle size |
|---|---|---|---|---|---|
| Levasil^{®} 50 | Akzo-Nobel, Leverkusen, DE | Dispersion, 50 wt.-% solids | Colloidical silica | 1.385 g/cm³ | 55 nm |
| Levasil^{®} 200A | Akzo-Nobel, Leverkusen, DE | Dispersion, 32 wt.-% solids | Colloidical silica | 1.205 g/cm³ | 15 nm |
| Levasil^{®} 300 | Akzo-Nobel, Leverkusen, DE | Dispersion, 30 wt.-% solids | Colloidical silica | 1.21 g/cm³ | 9 nm |

### Starting materials:

Polychloroprene dispersions: the polymerization was performed in a continuous process according to EP 0 032 977 A1.

### Dispersion A:

Into the first reactor of a polymerization cascade with seven identical reactors of 70 L volume each the water phase (W) and the monomer phase (M) were introduced by means of a measurement and control system in a constant ratio. The activator phase (A) was introduced as well. The mean time in each reactor was 25 minutes. The reactors corresponded to those described in DE 2 650 714 A1 (amounts given are in parts by weight per 100 g of parts by weight of monomers used).

| | | |
|---|---|---|
| Monomer phase (M): | chloroprene | 100.0 parts by weight |
| | n-dodecylmercaptane | 0.11 parts by weight |
| | phenothiazine | 0.005 parts by weight |
| | | |
| Water phase (W): | deionized water | 115.0 parts by weight |
| | sodium salt of an abietic acid | 2.6 parts by weight |
| | potassium hydroxide | 1.0 parts by weight |
| | | |
| Activator phase (A) | aqueous solution of formamidinesulfine (1%) | 0.05 parts by weight |
| | sodium persulfate | 0.05 parts by weight |
| | anthraquinone-2-sulfonic acid, sodium salt | 0.005 parts by weight |

The reaction started readily at an internal temperature of 10 °C. The heat of polymerization was dissipated by external cooling and the polymerization temperature was kept at 10 °C. After a monomer conversion of 70% the reaction was stopped by adding diethyl hydroxylamine. The remaining monomers were removed from the polymers by steam distillation. A strongly crystallizing product was obtained. The solids content of the product was 33 weight-%, the gel content 0 weight-% and the pH was 13.

### Dispersion B:

The process was the same as for dispersion A, but the amount of regulator was increased to 0.03 weight-%, the monomer conversion was increased to 80% and the polymerization temperature was increased to 45 °C in order to obtain a polymer with a high gel content. A less strongly crystallizing product was obtained. The solids content of the product was 38 weight-%, the gel content 60 weight-% and the pH was 12.9.

### Methods:

### 1. Creaming of an aqueous dispersion of an organic polymer dispersion and a silicon dioxide dispersion for determining the optimum amount of creaming agent:

Creaming tests were performed to determine the amount of creaming agent needed to reach the maximum solids concentration in the dispersions. The equipment used was a Brookfield LV DV III viscosimeter, a Knick KR301 pH meter and Sartorius 1364 laboratory scales. Furthermore, the creaming agent Manutex was provided as a 2% solution [w/w] (freshly prepared on the previous day) in deionized water. [

The pH of the mixture was recorded and 8 samples of 100 g silica dispersion were filled into bottles. To the samples, 10, 20, 30, 40 and 50 g, respectively, of the 2% creaming agent solution were added and gently mixed. Visual inspection of the samples was undertaken after storing the samples for 24 hours at room temperature.

The serum formed above the dispersion was measured with a ruler and the result was also recorded. The samples were finally homogenized by shaking at the maximum revolution speed and the pH was recorded again.

### 2. Particle size distributions:

The mean particle diameter of the silica particles was determined by ultracentrifugation according to H. G. Müller, Progr. Colloid Polym. Sci. 107, 180-188 (1997) and is expressed as the mass average.

### 3. Solids content:

Solids content was determined by drying the dispersions at 100°C for 16-18 hours. The amount of SiO₂ was determined as ash content after heating the sample at 850 °C-1000 °C for 30 minutes.

### Results:

### Examples 1-5: determination of the optimum amount of creaming agent:

| Example | 1 | 2 | 3 | 4 | 5 |
|---|---|---|---|---|---|
| Polychloroprene dispersion B [g] | 50 | 50 | 50 | 50 | 50 |
| Levasil 50 [g] | 50 | 50 | 50 | 50 | 50 |
| 2% Manutex solution [g] | 10 | 20 | 30 | 40 | 50 |
| Serum height [cm] | 4.7 | 5.9 | 6.0 | 5.2 | 4.9 |
| Appearance of serum | opaque | clear | clear | opaque | opaque |

According to these experiments the best amount of creaming agent was found to be 30 g of the 2% solution per 100 g of the silicon dioxide/polychloroprene dispersion.

Further creaming examples 6-8:

| Example | 6 | 7 | 8 |
|---|---|---|---|
| Levasil 50 [g] | 50 | 50 | - |
| Levasil 300 [g] | - | - | 50 |
| Polychloroprene dispersion A [g] | - | 50 | 50 |
| Polychloroprene dispersion B [g] | 50 | - | - |
| Solids content of mixture [%] | 44 | 41.5 | 31.5 |
| Optimum amount of 2% Manutex solution [g] | 30 | 60 | 80 |
| Solids content of concentrated phase [%] | 60.15 | 63.4 | 77 |
| Solids content of serum after drying at 100 °C [%] (polymer, alginate, SiO₂) | 5.1 | 2.4 | 18.3 |
| Solids content of serum after pyrolysis [%] (SiO₂ only) | 4.48 | 1.84 | 16.8 |
| Organic content in serum [%] | 0.62 | 0.56 | 1.5 |

50 g Levasil and 50 g of the polychloroprene dispersion were mixed and the 2% Manutex solution were added. After 24 hours two samples were taken from the lower, concentrated phase. The viscosity of the samples was detected (Brookfield, spindle nr. 3, 60/min) and the solid content after drying at 100 °C was measured. The upper serum phase contained solids (drying at 100 °C). After pyrolysis the solids remained, contained silicon dioxide.

### Example 9: composition of the dispersion after creaming as a function of the concentration of the creaming agent:

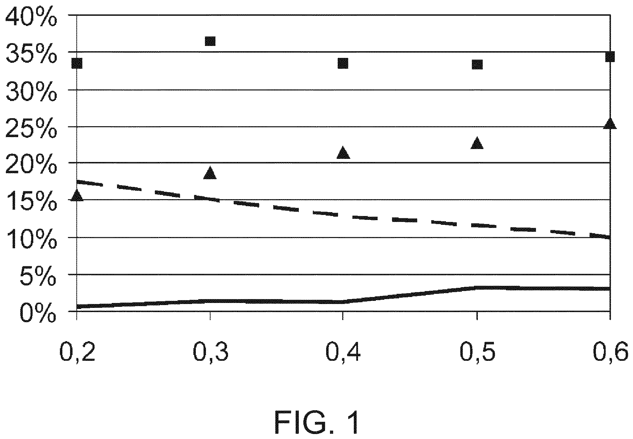

50 g Levasil 200A (32%) and 50 g polychloroprene dispersion B (38%) were mixed and 2% Manutex solution was added in specified amounts. After storing the resulting mixture the concentration (absolute data) of the components in both phases was determined. The results are summarized below and are depicted in FIG. 1.

| Manutex (2%) solution used [g] | SiO₂ content | | organic content | |
|---|---|---|---|---|
| | upper phase (Serum) | lower phase (high solid) | upper phase (Serum) | lower phase (high solid) |
| 10 | 17.52% | 15.76% | 0.70% | 33.47% |
| 15 | 15.04% | 18.79% | 1.42% | 36.55% |
| 20 | 12.82% | 21.40% | 1.32% | 33.42% |
| 25 | 11.48% | 22.79% | 3.16% | 33.23% |
| 30 | 9.91% | 25.40% | 3.05% | 34.41% |

FIG. 1 shows the solids content (y-axis) of the dispersion mixtures at various concentrations, given in %, of the Manutex alginate (x-axis). The solid line links the data points for the organic content in the upper phase and the dashed line the SiO₂ content in the upper phase. Squares represent the organic content in the upper phase and triangles the SiO₂ content in the lower phase. As can be seen from the graph, the higher the concentration of Manutex (alginate), the better the results, considering the SiO₂ content The organic content slightly increases in the upper phase (Serum) and remain constant in the lower one (high solid area). But we see a strong increase oft he SiO₂ content in the lower phase e.g. in the high solid area. The chemical composition of organic and inorganic segments in the high solid area change from 68% organic and 32% inorganic to 57% organic and 43% inorganic.

### Examples 10 and 11: acceleration of the creaming process by centrifugation with direct addition of the solid creaming agent:

| | time | Upper phase | | Lower phase | |
|---|---|---|---|---|---|
| | | (Serum) | | (high solid) | |
| | | SiO₂ content | organic content | SiO₂ content | organic content |
| Example 10: Polychloroprene B (50g) + Levasil 200A (50g) + Manutex 2% (30g) | 5 min | 10.45% | 3.65% | 25.08% | 33.52% |
| | 10 min | 9.01% | 1.39% | 25.88% | 34.53% |
| | 20 min | 9.11% | 1.30% | 26.18% | 34.76% |
| Example 11: Polychloroprene B (50g) + Levasil 50 (50g) + Manutex 2% (20g) | 10 min | 2.23% | 1.37% | 26.53% | 27.29% |
| | 20 min | 2.52% | 1.28% | 26.72% | 27.23% |

The results show that at about 10 minutes of centrifugation are sufficient to achieve the desired result such as a high amount of both inorganic SiO₂ and organic polymer dispersions in the lower "high solids" phase.

## Claims

1. A method of concentrating an aqueous dispersion comprising organic polymer particles and silicon dioxide particles, comprising the steps of:
a) providing an aqueous dispersion comprising organic polymer particles and silicon dioxide particles, the dispersion having an initial content of organic polymers and an initial content of silicon dioxide;
b) contacting the dispersion of step a) with a creaming agent to yield an aqueous serum phase and an aqueous concentrated phase,
the serum phase having an organic polymer content lower than the initial content of organic polymers in the dispersion of step a) and/or having a silicon dioxide content lower than the initial content of silicon dioxide in the dispersion of step a) and
the concentrated phase having an organic polymer content higher than the initial content of organic polymers in the dispersion of step a) and/or having a silicon dioxide content higher than the initial content of silicon dioxide in the dispersion of step a) and
c) separating the serum phase from the concentrated phase.

2. The method according to claim 1, wherein the organic polymer particles are selected from the group comprising styrene butadiene rubber particles, acrylonitrile butadiene rubber particles, polychloroprene particles, chloroprene-dichlorobutadiene copolymer particles, polybutadiene particles, polyisoprene particles, chlorinated polyisoprene particles, polyurethane particles, natural rubber particles, polyvinylchloride or (meth)acrylate particles and/or particles of copolymers thereof.

3. The method according to claim 1, wherein the organic polymer particles are present in the form of a polymer latex.

4. The method according to claim 1, wherein the initial content of organic polymers in the dispersion of step a) is ≥ 20 weight-% to ≤ 99 weight-%.

5. The method according to claim 1, wherein the silicon dioxide particles are present in the form of a silica sol, a silica gel, a pyrogenic silica dispersion, a precipitated silica dispersion or a mixture of these.

6. The method according to claim 1, wherein the initial content of silicon dioxide in the aqueous silicon dioxide dispersion of step a) is ≥ 1 weight-% to ≤ 80 weight-%.

7. The method according to claim 1, wherein in the dispersion of step a) the silicon dioxide particles have a bimodal or multimodal particle size distribution.

8. The method according to claim 1, wherein the creaming agent is selected from the group comprising alginates, cellulose derivates, methyl cellulose, agar-agar, poly(meth)acrylic salts, and/or copolymers of alkyl(meth)acrylates and/or styrene with unsaturated sulfonic acid derivates or olefinically unsaturated mono- or polycarboxylic acids or salts thereof.

9. The method according to claim 1, wherein the creaming agent is provided in form of an aqueous solution and the content of the creaming agent in the aqueous solution is ≥ 0.5 weight-% to ≤ 10 weight%.

10. The method according to claim 1, wherein the creaming agent is present in an amount of ≥ 0.2 weight-% to ≤ 10 weight-%, based on the solids content of the dispersion of step a).

11. The method according to claim 1, wherein the separation in step c) is at least partially performed by centrifugation.

## Patentansprüche

1. Verfahren zum Aufkonzentrieren einer wässrigen Dispersion, die Teilchen aus organischem Polymer und Siliciumdioxidteilchen umfasst, das folgende Schritte umfasst:
a) Bereitstellen einer wässrigen Dispersion, die Teilchen aus organischem Polymer und Siliciumdioxidteilchen umfasst, wobei die Dispersion einen Anfangsgehalt an organischen Polymeren und einen Anfangsgehalt an Siliciumdioxid aufweist;
b) Inberührungbringen der Dispersion aus Schritt a) mit einem Aufrahmmittel zum Erhalt einer wässrigen Serumphase und einer wässrigen konzentrierten Phase,
wobei die Serumphase einen Gehalt an organischem Polymer aufweist, der niedriger ist als der Anfangsgehalt an organischen Polymeren in der Dispersion von Schritt a), und/oder einen Siliciumdioxidgehalt aufweist, der niedriger ist als der Anfangsgehalt an Siliciumdioxid in der Dispersion von Schritt a), und
wobei die konzentrierte Phase einen Gehalt an organischem Polymer aufweist, der höher ist als der Anfangsgehalt an organischen Polymeren in der Dispersion von Schritt a), und/oder einen Siliciumdioxidgehalt aufweist, der höher ist als der Anfangsgehalt an Siliciumdioxid in der Dispersion von Schritt a), und
c) Trennen der Serumphase von der konzentrierten Phase.

2. Verfahren nach Anspruch 1, bei dem die Teilchen aus organischem Polymer aus der Gruppe bestehend aus Teilchen aus Styrol-Butadien-Kautschuk, Teilchen aus Acrylnitril-Butadien-Kautschuk, Teilchen aus Polychloropren, Teilchen aus Chloropren-Dichlorbutadien-Copolymer, Teilchen aus Polybutadien, Teilchen aus Polyisopren, Teilchen aus chloriertem Polyisopren, Teilchen aus Polyurethan, Teilchen aus Naturkautschuk, Teilchen aus Polyvinylchlorid oder (Meth)acrylat und/oder Teilchen aus Copolymeren davon ausgewählt sind.

3. Verfahren nach Anspruch 1, bei dem die Teilchen aus organischem Polymer in Form eines Polymerlatex vorliegen.

4. Verfahren nach Anspruch 1, bei dem der Anfangsgehalt an organischen Polymeren in der Dispersion von Schritt a) ≥ 20 Gew.-% bis ≤ 99 Gew.-% ist.

5. Verfahren nach Anspruch 1, bei dem die Siliciumdioxidteilchen in Form eines Kieselsols, eines Kieselgels, einer Dispersion von pyrogener Kieselsäure, einer Dispersion von Fällungskieselsäure oder einer Mischung davon vorliegen.

6. Verfahren nach Anspruch 1, bei dem der Anfangsgehalt an Siliciumdioxid in der wässrigen Siliciumdioxiddispersion von Schritt a) ≥ 1 Gew.-% bis ≤ 80 Gew.-% ist.

7. Verfahren nach Anspruch 1, bei dem in der Dispersion von Schritt a) die Siliciumdioxidteilchen eine bimodale oder multimodale Teilchengrößenverteilung aufweisen.

8. Verfahren nach Anspruch 1, bei dem das Aufrahmmittel aus der Gruppe umfassend Alginate, Cellulosederivate, Methylcellulose, Agar-Agar, Salze der Poly(meth)acrylsäure und/oder Copolymere von Alkyl(meth)acrylaten und/oder Styrol mit ungesättigten Sulfonsäurederivaten oder olefinsch ungesättigten Mono- oder Polycarbonsäuren oder Salze davon ausgewählt wird.

9. Verfahren nach Anspruch 1, bei dem das Aufrahmmittel in Form einer wässrigen Lösung bereitgestellt wird und der Gehalt des Aufrahmmittels in der wässrigen Lösung ≥ 0,5 Gew.-% bis ≤ 10 Gew.-% ist.

10. Verfahren nach Anspruch 1, bei dem das Aufrahmmittel in einer Menge von ≥ 0,2 Gew.-% bis ≤ 10 Gew.-%, bezogen auf den Feststoffgehalt der Dispersion von Schritt a), vorliegt.

11. Verfahren nach Anspruch 1, bei dem die Trennung in Schritt c) zumindest teilweise durch Zentrifugation durchgeführt wird.

## Revendications

1. Procédé de concentration d'une dispersion aqueuse comprenant des particules de polymères organiques et des particules de dioxyde de silicium, comprenant les étapes consistant à :
a) se procurer une dispersion aqueuse comprenant des particules de polymères organiques et des particules de dioxyde de silicium, la dispersion ayant une teneur initiale en polymères organiques et une teneur initiale en dioxyde de silicium ;
b) mettre la dispersion de l'étape a) en contact avec un agent de crémage pour obtenir une phase aqueuse sérique et une phase aqueuse concentrée,
la phase sérique ayant une teneur en polymères organiques inférieure à la teneur initiale en polymères organiques dans la dispersion de l'étape a) et/ou ayant une teneur en dioxyde de silicium inférieure à la teneur initiale en dioxyde de silicium dans la dispersion de l'étape a) et
la phase concentrée ayant une teneur en polymères organiques supérieure à la teneur initiale en polymères organiques dans la dispersion de l'étape a) et/ou ayant une teneur en dioxyde de silicium supérieure à la teneur initiale en dioxyde de silicium dans la dispersion de l'étape a) ; et
c) séparer la phase sérique de la phase concentrée.

2. Procédé selon la revendication 1, dans lequel les particules de polymères organiques sont choisies dans le groupe comprenant les particules de caoutchouc styrène-butadiène, les particules de caoutchouc acrylonitrile-butadiène, les particules de polychloroprène, les particules de copolymère chloroprène-dichlorobutadiène, les particules de polybutadiène, les particules de polyisoprène, les particules de polyisoprène chloré, les particules de polyuréthane, les particules de caoutchouc naturel, les particules de polychlorure ou poly(méth)acrylate de vinyle et/ou les particules de copolymères de ceux-ci.

3. Procédé selon la revendication 1, dans lequel les particules de polymères organiques sont présentes sous la forme d'un latex polymère.

4. Procédé selon la revendication 1, dans lequel la teneur initiale en polymères organiques dans la dispersion de l'étape a) est ≥ 20 % en poids à ≤ 99 % en poids.

5. Procédé selon la revendication 1, dans lequel les particules de dioxyde de silicium sont présentes sous la forme d'un sol de silice, d'un gel de silice, d'une dispersion de silice pyrogénée, d'une dispersion de silice précipitée ou d'un mélange de ceux-ci.

6. Procédé selon la revendication 1, dans lequel la teneur initiale en dioxyde de silicium dans la dispersion aqueuse de dioxyde de silicium de l'étape a) est ≥ 1 % en poids à ≤ 80 % en poids.

7. Procédé selon la revendication 1, dans lequel, dans la dispersion de l'étape a), les particules de dioxyde de silicium ont une distribution de taille de particules bimodale ou multimodale.

8. Procédé selon la revendication 1, dans lequel l'agent de crémage est choisi dans le groupe comprenant les alginates, les dérivés cellulosiques, la méthylcellulose, l'agar-agar, les sels poly(méth)acryliques, et/ou les copolymères de (méth)acrylates d'alkyle et/ou de styrène avec des dérivés d'acide sulfonique insaturés ou des acides mono- ou polycarboxyliques oléfiniquement insaturés ou des sels de ceux-ci.

9. Procédé selon la revendication 1, dans lequel l'agent de crémage est obtenu sous la forme d'une solution aqueuse et la teneur en agent de crémage dans la solution aqueuse est ≥ 0,5 % en poids à ≤ 10 % en poids.

10. Procédé selon la revendication 1, dans lequel l'agent de crémage est présent dans une quantité des 0,2 % en poids à ≤ 10 % en poids, rapporté à la teneur en matières solides de la dispersion de l'étape a).

11. Procédé selon la revendication 1, dans lequel la séparation à l'étape c) est au moins partiellement effectuée par centrifugation.
